# EUROPEAN PATENT APPLICATION

(11) **EP 1 120 219 A1**
(43) Date of publication of application: **01.08.2001**
(21) Application number: 99924015.3
(22) Date of filing: 14.06.1999
(51) Int. Cl.: B29C 45/00, B29C 45/73

(54) **METHOD FOR MOLDING FLUORORESIN AND MOLDED ARTICLE**

(30) Priority: 15.06.1998 JP 16673998; 30.04.1999 JP 12412899
(71) Applicant: Daikin Industries, Ltd., Osaka-shi, Osaka 530-8323 (JP); Honji, Hidetaka, Tsurugashima-shi, Saitama 350-2211 (JP); Honji, Asako, Tsurugashima-shi, Saitama 350-2211 (JP)
(72) Inventor: HONJI, Kunihiko DI, deceased (JP); KOMIYA, Yoshichika, Settsu-shi, Osaka 566-8585 (JP); ISHIWARI, Kazuo, Settsu-shi, Osaka 566-8585 (JP)
(74) Representative: HOFFMANN - EITLE
(86) International application number: JP9903142
(87) International publication number: WO9965659

(57) **Abstract**

There is provided a method for molding a fluorine resin which at least alleviates problems upon performing the current molding method.

The method for molding the fluorine resin so as to obtain a molded article of the fluorine resin by supplying the fluorine resin in a molten state into a mold and cooling so as to solidify the resin, which method is characterized in that the fluorine resin in the molten state is supplied into the mold which is kept at a temperature which is equal to or higher than a melting temperature of the fluorine resin. A preferable fluorine resin is a gelled and disintegrated fluorine resin.

## Description

### Technical Field

The present invention relates to a novel method for molding a fluorine resin and a molded article formed by the method.

### Background of the Invention

A fluorine resin is excellent in the heat resistance, the wear resistance and the chemical resistance and so on, and is widely utilized as one of the representative engineering plastics. However, since the fluorine resin has an extremely high melt viscosity in its melt state and has the worse flowability as compared with general-purpose other resins, it has been understood that it can not be easily molded by for example extrusion molding or injection molding. In particular, this is true in the case of an ultrahigh molecular weight fluorine resin having a melt viscosity of 10⁵ poise or higher. It is to be noted that a method for measuring the melt viscosity used herein will be described in detail below.

Polytetrafluoroethylene (PTFE) which is a representative fluorine resin has a great C-F bond energy of 110-120 kcal/mol and it is useful in for example the heat resistance, the chemical resistance, the non-stickiness, the wear properties and the weather resistance and so on. As a method for extrusion molding of PTFE, ram extrusion and paste extrusion are used.

Although the ram extrusion is suitable for continuously molding an extruded bar having the same cross-sectional shape as that of a die, it is difficult to obtain a molded article having a different cross-sectional shape from that of the die. This is also applicable to the case of the paste extrusion. Although sintered articles for tubes and wire coatings are continuously molded by helping the extrusion of PTFE by means of addition of a processing aid such as naphtha to powders of PTFE so as to wet the powders, it is also difficult to obtain a molded article having a different cross-sectional shape from that of the die in this method.

In addition, a heating compression molding method called a hot molding method for PTFE powder is used. Although a molded article having the high flex fatigue strength is obtained in this method, a great stress remains in a molded article and, thus, annealing is necessary. Additionally, it is difficult to obtain a number of molded articles at once and this method is limited to the case where special molded articles are to be obtained.

Therefore, in order to obtain a desired PTFE molded article, PTFE powder is generally compression-molded to make a pre-molded article, the pre-molded article is sinterd to produce a molded article, which is then subjected to a cutting processing. However, since this method has the deteriorated working efficiency, there is a desire to develop a method for molding PTFE by which the working efficiency is improved.

In addition, an ultrahigh molecular weight tetrafluoroethylene/perfluoroalkyl vinyl ether copolymer (PFA) and ethylene/tetrafluoroethylene copolymer (ETFE) are excellent in the resistance to stress crack, the resistance to impact and the mechanical strength as compared with a commercially available PFA or ETFE having a melt viscosity of 10³-10⁵ poise. However, it is considered that such the ultrahigh molecular weight PFA or ETFE is not easily molded by the extrusion molding or the injection molding as in PTFE.

As described above, the molding of the fluorine resin is not generally easy, but a variety of attempts have been tried to improve for example the injection molding. For example, in Japanese Patent Kokai Publication (JP-A) No. 6-234141, a method for molding a fluorine resin by so-called flash flow molding is proposed. The method for molding the fluorine resin was improved by such a molding method, but it is not necessarily satisfactory.

For example, when a fluorine resin such as PTFE is injection-molded, since the fluorine resin forms a bridge in a hopper, there are a problem that it is not easy to continuously supply the fluorine resin to a screw and a problem that the fluorine resin tends to slip on the screw so that feeding of the fluorine resin is to be supplied can not be performed smoothly. This is supposed to be based on an inherent nature of the fluorine resin that it is easily fibrillated and has a small frictional coefficient.

Such the problems can be basically solved by mechanically breaking the bridge or developing a screw form which is difficult to slip. However, such solution can not be necessarily said to be best, and there is still a need for provision of a new method which can further more effectively mold the fluorine resin.

### Summary of the Invention

Accordingly, an object of the present invention is to provide a novel method for molding a variety of fluorine resins including an ultrahigh molecular weight fluorine resin, which method at least alleviates the aforementioned problems as compared with a case where the conventional molding method is performed, and preferably to provide a molding method which more effectively solves aforementioned problems preferably so as to make it possible to obtain a molded article having a more complicated form than that of a molded article obtained by the die extrusion or the ram extrusion (more preferably by means of alleviating or eliminating the necessity of a secondary processing such as a cutting processing).

In the first aspect, the present invention provide a method for molding a fluorine resin by supplying the fluorine resin in its molten state to a mold followed by cooling so as to solidify the resin, whereby a molded article of the fluorine resin is obtained, which method is characterized in that the fluorine resin in its molten state is supplied into the mold which is kept at a temperature of a melting temperature of the resin or above the melting temperature.

In the second aspect, the present invention provides a method for molding a fluorine resin by supplying the fluorine resin in its molten state to a mold followed by cooling so as to solidify the resin, whereby a molded article of the fluorine resin is obtained, which method is characterized in that a fluorine resin which has been gelled and disintegrated in advance is used as the fluorine resin which is to be molded. In the method according to the second aspect of the present invention, a temperature of the mold may be lower than a melting temperature of the fluorine resin as in a variety of moldings which are generally carried out, and for example, the temperature of the mold may be not lower than a temperature which is lower than the melting temperature 50 °C by (i.e. the melting temperature of the fluorine resin - 50 °C) and lower than a decomposition initiating temperature of the fluorine resin.

However, in a particularly preferable embodiment of the second aspect of the present invention, when the molded article of the fluorine resin is obtained by supplying the fluorine resin in its molten state to the mold by cooling so as to solidify the resin, the fluorine resin in its molten state is supplied to the mold which is kept at a temperature equal to or higher than the melting temperature of the resin. That is, according to the method of the second aspect of the present invention, the fluorine resin is particularly effectively molded by combining with the method according to the first aspect.

It is noted that in the present invention, the melting temperature of the fluorine resin is a so-called melting point of the fluorine resin and it is measured by a differential scanning calorimeter as described below.

Further, the present invention provides a molded article of a fluorine resin which is formed by the aforementioned methods of the present invention. That is, the present invention provides a molded article obtained when molding is performed by setting a temperature of the mold at a temperature which is equal to or higher than the melting temperature of the fluorine resin, a molded article obtained when molding is performed using the fluorine resin which has been gelled and disintegrated, and a molded article obtained when molding is performed by setting a temperature of the mold at a temperature which is equal to or higher than the melting temperature and using the fluorine resin which has been gelled and disintegrated.

### Brief Description of the Drawings

Fig. 1 schematically shows a cross-sectional view of a mold which can be used in the method of the present invention;
Fig. 2 schematically shows steps in series of a molding method of the present invention wherein a mold is heated in a high frequency induction heating;
Fig. 3 schematically shows a cross-sectional view of a preplasticating (or preplasticizing) injection molding machine which is preferably used upon carrying out the method of the present invention;
Fig. 4 schematically shows steps in series of a injection press method in a cross-sectional view of a mold, which method is preferably used upon carrying out the method of the present invention;
Fig. 5 schematically shows a cross-sectional view of a in-line screw type injection molding machine which is preferably used upon carrying out the method of the present invention; and
Fig. 6 schematically shows a view of a molded article prepared in Examples of the present invention.

In the drawings, the reference numerals indicate the following elements:
10 ... mold, 11 ... fixed mold, 12 ... movable mold,
13 ...cavity, 14 ... plate for compression, 15 ... nozzle,
20 ... mold, 21 ... cavity, 23 ... cavity defining surface,
24 ... high frequency induction heating coil,
25 ... fluorine resin, 26 ... molded article,
30 ... preplastication injection molding machine,
31 ... hopper, 32 ...cylinder, 33 ... screw,
34 ... cylinder for injection, 35 ... cavity,
36... passage, 37 ... plunger, 38... nozzle,
40 ... fixed mold, 41 ... fluorine resin,
42 ... movable mold, 43 ... molded article,
50 ... molding machine, 51 ... hopper,
52 ... cylinder, 53 ... screw, 55 ...nozzle.

### Embodiments to Carry out the Invention

In any aspect of the present invention, the fluorine resin is a resin in which a fluorine atom constitutes a part of a polymer structure. In particular, a fluorine resin which is poorly molded by the aforementioned conventional molding methods can be included in the fluorine resin which is used in the present invention. Concretely, a fluorine resin having its melt viscosity of at least 10⁵ poise is included. The upper limit of the melt viscosity of the fluorine resin is not particularly limited as far as the fluorine resin in the molten state is supplied to the mold. For example, a fluorine resin having a melt viscosity of 10¹³ poise can be used. For example, a fluorine resin having a melt viscosity of a 10⁵-10¹³ poise, and preferably 10⁵-10¹² poise can be used in the method of the present invention.

As the fluorine resin which can be used in the method of the present invention, there are a homopolymer of tetrafluoroethylene, perfluroalkyl vinyl ether, hexafluoropropylene, chlorotrifluoroethylene or vinylidene fluoride, a copolymer of two or more of these, a copolymer of tetrafluoroethylene and ethylene, and a copolymer of chlorofluoroethylene and ethylene.

More concretely, polymers such as PTFE (polytetrafluoroethylene), PFA (tetrafluoroethylene/perfluoroalkyl vinyl ether copolymer), FEP (tetrafluoroethylene/hexafluoropropylene copolymer), PCTFE (polychlorotrifluoroethylene), PVDF (polyvinylidene fluride), ETFE (ethylene/tetrafluoroethylene copolymer), and ECTFE (ethylene/ chlorotrifluoroethylene copolymer) and the like are included in the fluorin resins which can be used in the methods of the present invention. Inter alia, PTFE can be particularly conveniently used in the methods of the present invention. Further, any combination of these polymers (for example, a mixture such as a compound) may be used.

When the combination is non-compatible, a melting temperature and a decomposition initiating temperature in the present invention refer to the highest melting temperature and the lowest decomposition initiating temperature among the melting temperatures and the decomposition initiating temperatures of components which constitute the combination, respectively (the same component may have both the highest melting temperature and the lowest decomposition initiating temperature, and different two components may have the highest melting temperature and the lowest decomposition initiating temperature, respectively). When the combination is compatible, the melting temperature and the decomposition initiating temperature in the present invention are a melting temperature and a degradation initiating temperature of the compatible combination.

PTFE which can be used in the present invention may include, for example, a copolymer (normally, in the powdery form) of tetrafluoroethylene modified with 2 % by weight or less of a copolymerizable monomer. As the copolymeraizable monomer used in this modification, the following may be exemplified: a perfluoroalkene having 3-6 carbon atoms (for example, hexafluoropropylene), a perfluoro(alkyl vinyl ether) having 3-6 carbon atoms (for example, perfluoro(propyl vinyl ether)). These modified copolymers have a high melting viscosity like PTFE homopolymer and are not easily extrusion-molded or injection-molded by the conventional method.

Further, the fluorine resin used in the present invention may also include an ultrahigh molecular weight PFA (of which melt viscosity is 10⁵-10⁷ poise) and an ultrahigh molecular weight ETFE (of which melt viscosity is 10⁶ -10⁷ poise).

The fluorine resin used in the present invention may optionally contain an appropriate amount of other component(s), for example, an additive and/or an auxiliary, as long as it does not have the adverse effect on the method of the present invention (that is, as long as it does not make molding impossible). As such an additive, there can be exemplified fillers (glass fiber, graphite, molybdenum disulfide, carbon fiber, bronze and the like), colorant and the like.

Since a fine powdery resin such as molding powder or fine powder of PTFE does not have necessarily sufficient flowability, the fluorine resin used in the present invention is preferably in the form of powder (or particulate or granular) having easy flowability, a so-called granulated resin. When such resin is used, it is unlikely to form a bridge when the resin is charged in a hopper and the supply to a screw is facilitated, being advantageous.

Particularly preferable fluorine resins used in the method of the present invention are fluorine resins obtained by gelling and disintegrating in advance a variety of the fluorine resins which can be used in the methods of the present invention as described above (also referred to as a "gelled and disintegrated fluorine resin" herein). As used herein, the fluorine resin which has been gelled and disintegrated in advance means a material which is obtained by gelling to integrate a fine powdery or powdery fluorine resin (hereinafter, simply referred to as "powdery fluorine resin") followed by grinding (or size reduction). A generally commercially available powdery fluorine resin called "molding powder or fine powder" is the powdery fluorine resin to which this gelling and disintegration can be applied.

As used herein, "gelling" means subjecting the powdery fluorine resin obtained by polymerization to a heat-treatment as follows:

The fluorine resin is exposed to a temperature in the range between (a temperature lower than the melting temperature of the fluorine resin by about 50 °C) and (a decomposition initiating temperature of the fluorine resin), preferably to a temperature which is not lower than the melting temperature and lower than the decomposition initiating temperature of the fluorine resin, and more preferably to a temperature in the range between a temperature higher than the melting temperature by about 20 °C a temperature higher than the melting temperature by about 80 °C for a predetermined time (for example 1-5 hours) first after polymerization in an inert atmosphere or in an air and, thereafter, the fluorine resin is cooled to a temperature below the melting temperature of the fluorine resin preferably gradually.

Therefore, the fluorine resin obtained by the polymerization have not undergone a thermal history at such a high temperature as described above before gelling.

Since individual particles of the powdery fluorine resin which has been subjected to the "gelling" treatment are bound integrally as a whole by weak bonding forces while they are maintaining their particle forms, in order to supply the fluorine resin to a molding machine, it is necessary to grind the resin into particles having a predetermined size. Such grinding is called "disintegration". The disintegration may be conducted by any suitable means and, for example, may be conducted using a granulator. The predetermined size upon the disintegration may be appropriately selected depending upon a molded article, conditions of a molding machine and the like and, generally, the disintegration may be performed so that a particle size becomes 5 mm or less, for example, an average particle size becomes 1 mm - 3 mm.

Cutting shavings (or tailings) formed upon production of a molded article of a fluorine resin by the prior art (that is, cutting shavings which is produced when a pre-molded article obtained by compression molding of the fluorine resin is sintered and thereafter, the pre-molded article is cut, and which is discarded currently) have substantially undergone the aforementioned gelling treatment and, therefore, by grinding such cutting shavings, they can be used as the gelled and disintegrated fluorine resin according to the present invention (it is noted that when a size of the cutting strip is small as described above, the cutting strip, of course, can be used as the gelled and disintegrated resin without grinding). Alternatively, an unsintered powdery fluorine resin (or not gelling-treated powdery fluorine resin) may be used by mixing with the gelled and disintegrated fluorine resin within a range wherein does the effects of the present invention are not affected.

Such "gelling and disintegration" as described results in the fluorine resin which has preferable properties for the molding, in particular the injection molding. In particular, the prior art problems when a general injection molding machine is used that the fluorine resin tends to form a bridge in a hopper part and that the resin is easily slipped over a screw for supplying the resin so that feeding of the resin is not done well, can be alleviated and preferably eliminated even when the same molding machine is used.

It is presumed that a variety of changes in the properties of the fluorine resin occur by the aforementioned "gelling" treatment and at least an apparent density of the resin is increased. In other words, such the increase in the density can be expressed as the fluorine resin having being "densified" due to increase in a density of powdery fluorine resin particles themselves. Increase in the density depends upon the conditions of gelling, a kind and a grade of the fluorine resin and the like and, generally, the apparent density of the fluorine resin increases by 30-200 % as a result of the increase in the density of the powdery particles themselves due to the gelling.

Accordingly, in the present invention, the "gelled" fluorine resin can be defined as a fluorine resin having the increased apparent density, which resin can decrease the formation of the bridge in a molding machine as compared with the ungelled fluorine resin. In addition, the "gelled and disintegrated fluorine resin" can be defined as a powdery fluorine resin which can be obtained by grinding such gelled fluorine resin in order to allow the gelled fluorine resin to be used in a molding machine. In addition, the gelled and disintegrated fluorine resin can be easily transferred with a screw in a molding machine as compared with the ungelled fluorine resin and, as a result, has the great range within which molding conditions involved in operation of the screw of the molding machine are set and thereby the moldability becomes better.

It is contemplated that one of reasons why the transfer by means of the screw becomes easier in the gelled fluorine resin can be due to decrease in the apparent viscosity. The powdery fluorine resin tends to show the continuity due to binding between the particles also in the a screw for the same reason as in why it tends to form the hopper bridge, and as a result, the powdery fluorine resin wherein the particles have strong entanglement shows a high viscosity which is inherent in the fluorine resin and feeding with a screw is difficult. As compared with this, since the gelled and disintegrated fluorine resin has undergone the aforementioned thermal history, the binding force becomes stronger within the particles, but hardly shows the continuity (or binding) between the particles. For this reason, even when heated by the screw, the gelled and disintegrated fluorine resin hardly shows the continuity as compared with the powdery fluorine resin and the apparent viscosity of the gelled and disintegrated resin is lower and, thus, feeding with the screw becomes easy.

As one possibility, the weak binding between the particles of the gelled fluorine resin and the densification of the fluorine resin as described above can be understood as follows:

The gelled and disintegrated fluorine resin becomes in a molten state at a temperature above its melting point and, even in such a state, individual particles of the resin substantially retains its original particle form without being deformed due to its high viscosity, and as a result, adjacent particles remain in contact with each other nearly in the substantially point contact state. It is noted that after polymerization, a powdery fluorine resin which has undergone no thermal history before gelling is in the state where individual particle is nearly spherical and, the resin is subjected to a temperature exceeds a melting point upon gelling preferably substantially without no load, so that the particle of the gelled and disintegrated fluorine resin also retains its spherical form.

Therefore, the particles which are adjacent to each other during the gelling-treatment have a small area with which they are in contact with each other, and they fuse so that they are bound with each other through such the contact part. As a result, it is considered that the fluorine resin is integrated as a whole to an extent that the disintegration is necessary. Since the contact area is small, this binding is not firm, and when the binding is the weakest, the binding can be disrupted by a considerably weak force (for example, a force which can be applied by hand) in some cases.

In addition, in such the binding between the particles, even when the fluorine resin is exposed to a temperature lower than its melting point, for example even at a temperature in the range between a temperature lower than its melting point by about 50 °C and the melting point, surfaces of the particles are bound and integrated similarly when an exposing time is longer and or a load is applied.

It is contemplated that when the fluorine resin is exposed to a high temperature such as the aforementioned gelling temperature, motion of a polymer chain in the particle becomes active, the polymer chains are likely to be mutually entangled within the particle and the structure of the particle becomes small and dense, and as a result, not only the particle is shrunk but also its density becomes high. Paying an attention to the individual particle of the fluorine resin, it is contemplated that the size of the particle becomes smaller than the original size by gelling and the density of the particle becomes higher correspondingly.

As explained above, when the above-mentioned gelled and disintegrated fluorine resin is used for molding, the temperature of the mold may be higher than the melting temperature of the fluorine resin or may be lower than the melting temperature (provided that the temperature is higher than a temperature which is lower than the melting temperature by about 50 °C). However, a preferable temperature of the mold is the range between the melting temperature and a temperature which is lower than the decomposition initiating temperature of the fluorine resin by 50 °C. A more preferable temperature of the mold is in the range between a temperature which is higher than the melting temperature by 50 °C and a temperature which is higher than the melting temperature by 100 °C. Accordingly, in the explanation below, a case where molding is performed by heating the mold to a temperature higher than the melting temperature of the fluorine resin is mainly explained. But when the gelled and disintegrated fluorine resin is used as the fluorine resin, the temperature of the mold may be lower than the melting temperature.

As explained below by referring to the drawings, the molding method which can be used in the present invention is the injection molding, and particularly preferably, an injection compression molding method in which compression is applied after or at the same time with the injection into the mold. Such molding method is a well-known method itself. The method of the present invention is substantially different from such method in respect of the temperature of the mold and/or the use of the gelled and disintegrated fluorine resin, whereby, molding can be performed more effectively as compared with the conventional molding method.

As used herein, the melting viscosity of the fluorine resin refers to a viscosity of a fluorine resin which has undergone substantially no thermal history at a temperature higher than a temperature which is lower than the melting temperature by about 50 °C after the preparation of the resin, and the viscosity means a melt viscosity measured according to the method described in Japanese Patent Kokai Publication (JP-A) No. 10-53624 (or WO98/06762 or EP-A 0919575) and Japanese Patent Kokai Publication (JP-A) No. 6-234141.

When the melt viscosity of the fluorine resin is expected to be around 10⁷-10¹³ (unit: poise) (a person skilled in the art can expect empirically a rough melt viscosity based on a kind of the resin and its other properties), the melt viscosity means a viscosity measured by the following method:
The melt viscosity is a value of η* (dynamic viscosity) at 380 °C and a shear rate of 1.26 rad/s which is measured using a viscoelasticity measuring machine RDS-2 manufactured by Rheometrics as a measuring apparatus. When the melt viscosity of the fluorine resin is around 10⁵-10⁸ (unit: poise) (a person skilled in the art can expect empirically a rough melt viscosity based on a kind of the resin and its other properties), the melt viscosity means a melt viscosity measured at a temperature and a load shown in the following Table 1 using Capillary Flow Tester (manufactured by Shimadzu Corporation).;

**Table 1**

| Fluorine Resin | Temperature (°C) | Load (kgf) |
|---|---|---|
| PFA | 380 | 7 |
| FEP | 380 | 7 |
| PCTFE | 240 | 100 |
| PVDF | 230 | 7 |
| ETFE | 300 | 7 |
| ECTFE | 300 | 7 |

In the present invention, the temperature to which the mold is heated is equal to or above the melting temperature of the fluorine resin used for molding (it is of course, in the case of using the gelled and disintegrated fluorine resin, the temperature may be lower than the melting temperature), but it should not be so high to an extent that an adverse effect on the quality of the molded article is caused. The temperature causing the adverse effect on the molded article depends upon an intended molded article. However, generally, the temperature to which the mold is heated is preferably in the range between the a melting temperature of the fluorine resin and a temperature which is lower than the degradation initiating temperature of the fluorine resin by 50 °C, and more preferably in the range between a temperature 50 °C which is higher than the melting temperature of the fluorine resin by 50 °C and a temperature which is higher than the melting temperature of the fluorine resin by 100 °C. In any cases, it is not preferable to heat the mold to a temperature which is above the decomposition initiating temperature of the fluorine resin.

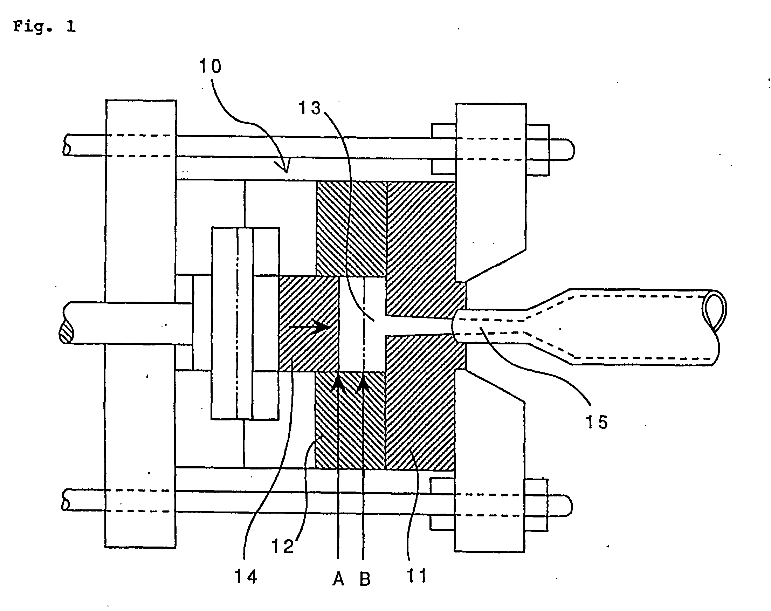

In the method of the present invention, the mold to be used is not particularly limited as long as it is a mold which is generally used for the injection molding or the injection compression molding and which can be heated to a prescribed temperature. For example, a mold schematically shown in a cross-sectional view in Fig. 1 can be used. In this mold 10, a cavity 13 is defined by a fixed mold (or a stationary half) 11 and a mobile mold (or a movable half) 12, and it is preferable that a volume of this cavity can be varied by moving a compression plate 14 in an arrow direction (from position A towards position B). Alternatively, the mobile mold 12 has a structure which can vary a volume of the cavity.

The fixed mold 11 can be provided with a nozzle 15 of an injection molding machine and a molten fluorine resin can be supplied to the cavity 13 through this nozzle. Surfaces of the molds 11 and 12 as well as the plate 14 which define the cavity 13 are heated to a predetermined temperature which is equal to or higher than the melting temperature of the fluorine resin to be molded.

In the method of the present invention, heating of the mold to the temperature as described above may be performed by any manner. That is, a manner which is generally used for heating a mold upon resin molding (for example, a manner using a cartridge heater embedded in the mold) can be used. However, in a preferable aspect, the mold, and in particular, selectively only surface parts of the mold defining its cavity are heated using high-frequency induction heating.

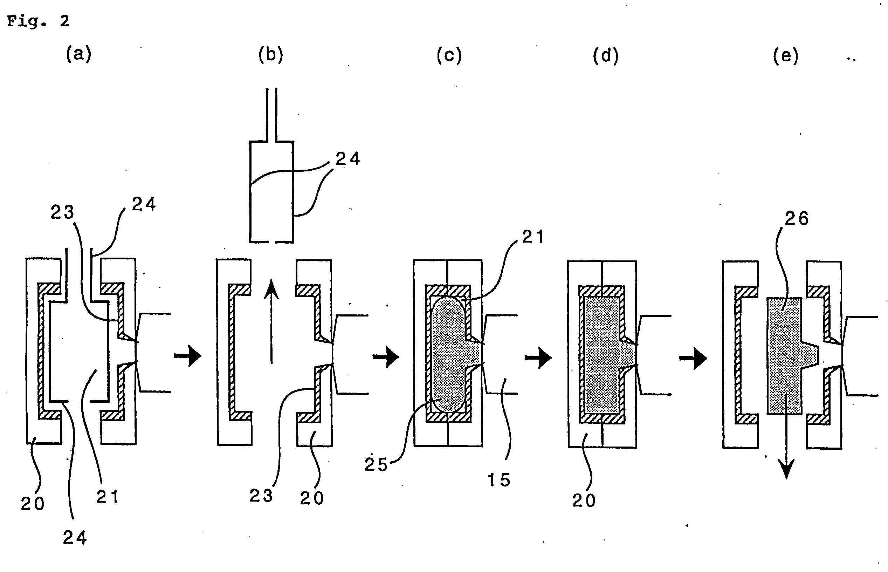

For example, as schematically shown in a cross-sectional view of a mold in Fig. 2, a high-frequency induction heating coil 24 having a shape substantially which is complementary with a shape of surfaces 23 defining a cavity 21 of the mold 20 is prepared. The coil is placed in the cavity of the mold. Electric current is flown through the coil to heat the mold to a predetermined mold temperature (or a temperature slightly higher than the predetermined temperature in view of a slight temperature decrease) by high-frequency induction heating (see Fig. 2(a)). Thereafter, the coil 24 is removed from the mold 20 (see Fig. 2(b)). Then, the mold is closed, and the fluorine resin 25 in the molten state is supplied into the mold via the nozzle 15 of the molding machine while the surfaces of the mold is held at the predetermined temperature (see Fig. 2(c)), followed by waiting formation of a molded article 26 by cooling the resin for the solidification thereof (see Fig. 2(d)). After cooling, the mold is opened and the molded article 26 is removed from the mold (see Fig. 2(e)).

As described above, when the high-frequency induction heating is used, only the surfaces of the mold and thin layer parts below the surfaces are rapidly heated to a high temperature and the other parts are not so heated and, therefore, cooling proceeds rapidly after the resin is supplied. Therefore, there is an advantage in that a cycle time for molding can be shortened.

The present method can be carried out by supplying the molten resin to the mold kept at a temperature which is equal to or higher than the melting temperature of the fluorine resin using an usual injection molding machine. In the present method, melting the fluorine resin may be carried out by any suitable method, but a melting method which is generally used for the injection molding may be applied. For example, melting the fluorine resin may be carried out by heating a cylinder and/or a screw of a molding machine, from which heat is conducted to the resin, and further by utilizing exothermic heat by means of shear energy when kneading the fluorine resin between the screw and the cylinder.

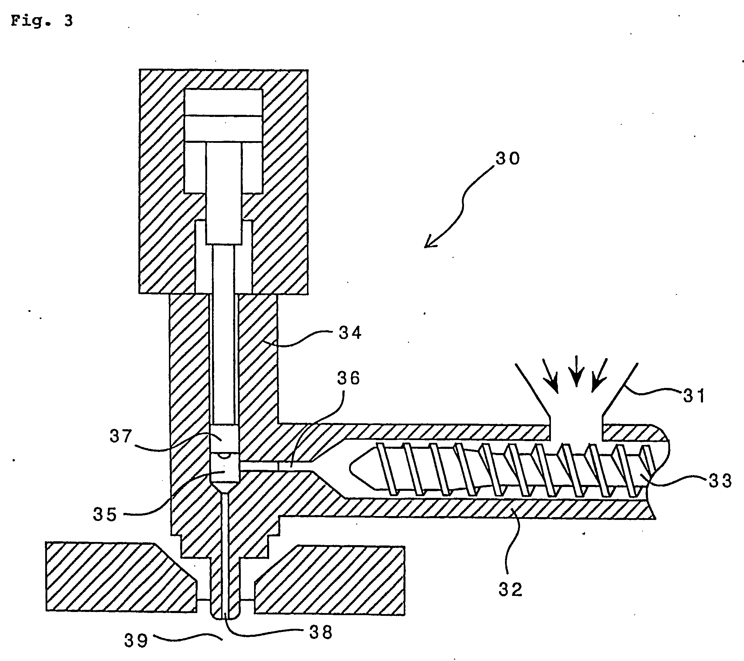

In particular, one preferable embodiment, a so-called preplasticating (or preplasticizing) injection molding as machine schematically shown in Fig. 3 is employed.

In this molding machine 30, a fluorine resin supplied through a hopper 31 is heated and kneaded with a cylinder 32 and/or a screw 33, so that the resin is plasticized to be molted. A predetermined amount of the molten resin is supplied to a resin holding cavity 35 in the cylinder 34 for injection having heating/temperature holding functions where the resin is once stored, and thereafter, a communicating passage 36 between the screw and the cavity is blocked by a suitable means (for example, blocked by closing the passage with a tip part of the screw) and, thereafter, the molten fluorine resin is injected into a cavity 39 in the mold through a nozzle 38 from the cavity 35 using a plunger 37 for injection.

In such a preplasticating injection molding machine, heating and melting of the fluorine resin is carried out by means of the cylinder 32 and/or the screw 33 and metering of the resin to be molded is carried out by supplying the resin into the cavity 35 with the screw 33. Therefore, as compared with a case wherein an injection molding machine is used which has only a screw for metering by rotating the screw, there is an advantage in that reciprocating motion of the screw is unnecessary and temperature distribution of the resin is uniform.

Optionally, after the fluorine resin is supplied to the mold, the resin in the mold is pressurized using a movable member of the mold (for example the plate 14 of Fig. 1) and thereby the resin is held in the mold at a high pressure. As a result, the resin supplied in the mold is surely spread throughout the mold and, at the same time, the pressure is equally transmitted throughout the resin, and thus, a uniform molded article can be obtained which has a predetermined shape corresponding to the mold and a high density.

It is noted that in the case where the molten resin is once stored in the cavity and an amount of the resin to be injection-molded is metered as in the aforementioned preplasticating injection molding machine, it is preferred that a high back pressure is acted on the cavity 35 which is higher than that of the molten resin supplying side (for example, the screw 33 side in the above-mentioned preplasticating injection molding machine), so that it makes necessary to supply the resin under a pressurized condition in order to supply the resin into the cavity. For example, when the above-mentioned preplasticating injection molding machine is used, the high back pressure can be established by applying a pressure to the plunger 37 for injection to a some extent.

Since, by doing as the above, a gas (for example, air) entrained during melting and kneading the fluorine resin is compressed so that a volume occupied by the gas is reduced or the gas is discharged backward through the screw, there is an advantage in that an error in an amount of the metered resin due to the presence of the air is suppressed. Therefore, in one preferable embodiment of the present invention, the molten fluorine resin is supplied into the cavity, to which back pressure is acted, at a pressure higher than the back pressure and stored once in the cavity, and the molten fluorine resin is supplied to the mold from that cavity.

As an injection molding machine, a plunger type and an in-line screw type are suitable for the injection molding of the fluorine resin in the present invention, in addition to the preplasticating type. In the case of the plunger type injection molding machine, a space for metering is made beneath a hopper by moving a piston rod and the fluorine resin is dropped into that space, and thereafter the piston rod is moved forward so that the fluorine resin is conveyed forward.

In this method, the piston rod is moved forward for injecting the resin, and since the resin is supplied upon thus being moved, the pressure for supplying is an injection pressure itself. The pressure is generally as great as 200-600 Kg/cm², a force for conveying a material is greater as compared with the in-line screw type injection molding machine. In addition, the space for supplying the fluorine resin is large and a bridge is hardly to be formed.

In the in-line screw type, the fluorine resin can be continuously supplied by screw rotation, and uniform plasticization is easy. However, a friction influences on a force for conveying a material and the fluorine resin which has a small friction coefficient is disadvantageous because of force loss. Further, since a space into which a material is dropped is small, a bridge is easily generated. Thus, an attention must be paid to these matters.

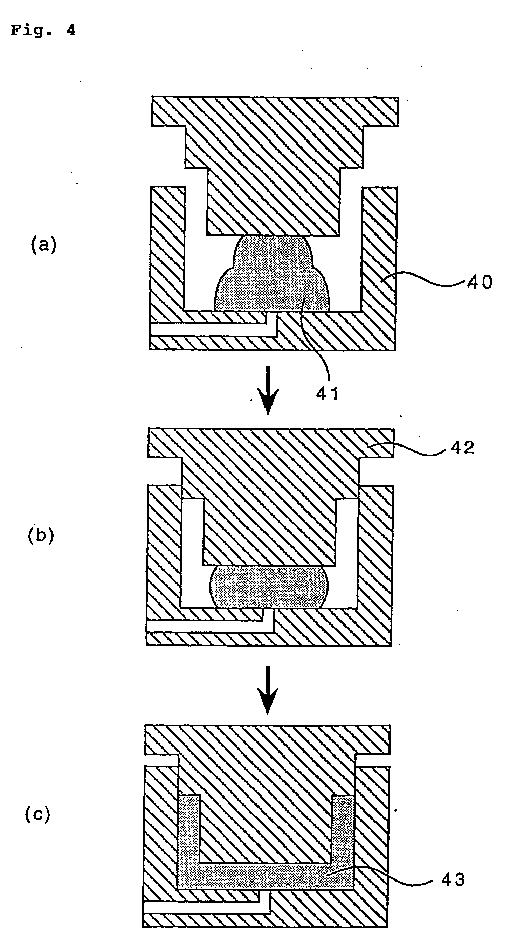

In other embodiment of the present invention, the method of the present invention is performed using an injection press so as to carry out molding. That is, the present method is performed by an injection compression molding method. In this embodiment, for example, as in Fig. 4 schematically showing a cross-section of a mold, the molten fluorine resin 41 is supplied into an open fixed mold 40 which is kept at a predetermined temperature (see Fig. 4(a)), and thereafter, the resin is pressed by closing an open mold by a pairwise movable mold 42 (see Fig. 4(b)) so as to shape the resin and, thereafter, the resin is cooled while holding the pairwise force 42 (see Fig. 4(c)). Thereafter, the mold is opened and the molded article 43 is taken out.

In such an embodiment using the injection press, differently from a usual injection molding in which a resin is supplied to a closed mold, since a smaller injection pressure supplies the molten resin to the mold and the pressure is acted uniformly throughout the resin in the mold, the molded article 43 having no local variance in strength can be obtained. In addition, since a compression force is acted upon solidification of the resin, deformation due to shrinkage can be suppressed to a minimum.

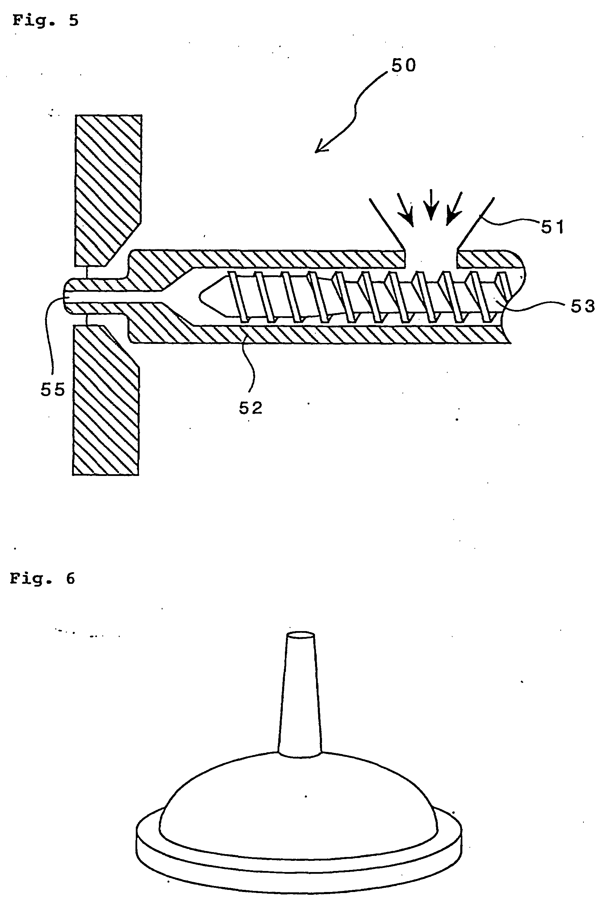

In a further embodiment of the present invention, the method of the present invention is carried out using a so-called in-line injection molding machine which is schematically shown in Fig. 5. The molding machine 50 shown in Fig. 5 has a structure in which the fluorine resin is transported with a screw 53 from a hopper 51, the resin transported to the end of the screw is supplied in a cavity of the mold through a nozzle 55 by means of the screw. The resin is supplied to the end of the screw by the screw while the back pressure is acted on the transported resin.

In this embodiment, the mold may have the structure in which when a pressure of the resin being injected increases beyond a threshold, a volume of a cavity which has been formed before injection expands. In this case, since the cavity space is enlarged so that the resin is easily filled, and at the same time a suitable back pressure is available, there is an advantage in that an air is easily escaped. Concretely, the mold has a structure as follows: In a state before the resin is supplied, the mold defines a closed cavity as shown in Fig. 4(c), and at that state of the mold, the resin is supplied, and the movable mold 42 is moved upwards depending upon an injection pressure of the resin and opened to reach the state shown in Fig. 4(b), and thereafter the opened movable mold 42 is moved downwards so as to compress the resin, whereby a molded article is obtained.

In the method of the present invention, when the molten resin is supplied the mold at a predetermined amount, the resin may be supplied at any rate, but it is preferable that the resin is supplied at a rate which is as small as possible.

In a preferable embodiment, the resin supplying rate at an outlet of the nozzle 38 for supplying the resin in the mold is 10⁷ sec⁻¹ or lower, and preferably 10⁴ sec⁻¹ or lower as a shear rate. When a cross-section of the nozzle is a circle, the shear rate is expressed by the following equation: γ=4Q/π R³ (wherein γ represents a shear rate (sec⁻¹), Q represents an amount of a resin to be injected (cc/sec), and R represents an inner distance of a tip of the nozzle (radius, cm) (see "Injection Molding" authored by Shoji Seto, published by Plastic Age K.K., supplemented on July 1, 1970, 6th edition, page 38). Therefore, a desired shear rate can be obtained by appropriately selecting the inner radius of the tip of the nozzle and the amount of injection.

When a shear rate is 10⁴ sec⁻¹ or higher, the molten resin easily becomes a particulate form when it is supplied in to the mold. Such resin is easily combined in the mold held at a temperature which is equal to or higher than the melting temperature, and occasionally, at a position which is away from the surface of the mold, the resin may be cooled to solidify while it is still in a particulate form, and thus, voids exist around the particle. In such case, the voids can be reduced to a minimum by compression after the supply of the resin.

However, most preferably, such particles are not formed upon the supply of the resin in to the mold. In order to avoid this formation of the particles, it is preferable that a supply rate of the resin is lowered to a some extent and the critical shear rate therefor is 10⁴ sec⁻¹. Of course, the critical rate depends on the resin to be used and a temperature of the molten resin, but the aforementioned rate is a critical value as a measure. In a more preferable embodiment, a shear rate when the molten resin is supplied is 1-10³ sec⁻¹. In addition, if the shear rate is too large when the resin is supplied through the nozzle, a shear force acts on the resin, and as a result, there is a possibility that a molecular weight of the resin becomes smaller by the heat and the mechanical action by the stress. Also from such a point of view, it is preferable that the molten resin is supplied slowly into the cavity of the mold, and the shear rate upon supplying the resin may be for example 10-10² sec⁻¹.

In the method of the present invention, the fluorine resin filled in a cylinder is melted preferably at a temperature which is equal to or higher than the melting temperature of the fluorine resin and which is lower than the decomposition initiating temperature of the fluorine resin. As a result, even when the resin is injected through the nozzle in the molten state, a remarkable decrease in a molecular weight of the fluorine resin due to temperature increase derived from shear at the nozzle is not caused. For example, an ultrahigh molecular weight PFA (of which melt viscosity is 10⁵-10⁷ poise) or an ultrahigh molecular weight ETFE (of which melt viscosity is 10⁶-10⁷ poise) is injection-molded under the condition as described, decrease in the molecular weight of the molded article is small and the molded article having more excellent heat resistance, friction and wear properties and repeated flex fatigue properties than those of a molded article of a normal PFA (of which melt viscosity is 10⁴-10⁵ poise) or a normal ETFE (of which melt viscosity is 10³-10⁴ poise).

In the present invention, the melting temperature is a value (°C) which is measured by a differential scanning calorimeter (manufactured by Perkin Elmer, DSC-7; second up). In addition, the decomposition initiating temperature of the fluorine resin is a value (°C) which is measured by a differential thermobalance (manufactured by Shimadzu Corporation, TGA-50: temperature rising rate 10 °C/min., in air). When molding is performed using the gelled and disintegrated fluorine resin, the melting temperature and the decomposition initiating temperature which are used as measures of the mold temperature are a melting temperature and a decomposition initiating temperature which are measured on the fluorine resin before gelling.

In the method of the present invention, the molten resin supplied into the mold is cooled, whereby the resin is solidified, that is the resin is cooled and solidified. An extent of this cooling is not particularly limited as long as the resin is solidified, and can be suitably selected by a person skilled in the art depending upon an intended molded article. For example, the fluorine resin is cooled to a temperature which is lower than the melting temperature of the fluorine resin by 100 °C, and preferably to room temperature, and the mold is opened to remove the molded article.

### Industrial Applicability

In the method of the present invention, since the mold temperature is higher than the melting temperature of the fluorine resin, the resin injected into the mold retains its molten state even after the injection, and thus the molded article having a desired shape or even a complicated shape is obtained in the state where the resin is sufficiently fused. Thus, according to the method of the present invention, the fluorine resin including the ultrahigh molecular weight fluorine resins can be easily and effectively molded. Since the resulting molded article has a few surfaces to be cutting-processed, there are no problems as to cutting and fuzz, and the article is excellent in the repeated flex fatigue properties in a high temperature chemical solution and the friction and wear properties.

Since a desired molded article can be substantially obtained in a single injection molding step using the injection molding machine according to the method of the present invention, the processing cost of the fluorine resin can be considerably reduced. In addition, since the fluorine resin is excellent in the heat resistance, the chemical resistance, the non-stickiness, the friction and wear properties and the weather resistance, the molded article obtained by the present method is useful, in particular, in a packing, a flange, a gasket, a bearing, a sleeve and a valve for a liquid chemical, a sliding part of for example a pump, and a sealing part.

Further, when the gelled and disintegrated fluorine resin is used as the fluorine resin, the formation of the bridge in the molding machine is suppressed and versatility regarding the screw operation is extended, and thus, more effective injection molding becomes possible.

### Examples

### Example 1

Using an injection molding machine as shown in Fig. 3 to which a mold as shown in Fig. 3 was attached, a granule type PTFE (manufactured by Daikin Industries Ltd., trade name: NEW POLYFLON TFE, a granulated product produced by water granulation of M-111, melt viscosity: 6x10⁹ poise, average granule diameter: 500 µm, apparent density: 0.90 g/cm³, true density: 2.17 g/cm³, melting temperature: 324 °C, decomposition initiating temperature: 493 °C) was injection-molded.

First, the fluorine resin was kneaded and melted by means of the screw 33 and the cylinder 32, and once stored in the cylinder cavity 35 having the nozzle 15 (38) (of which inner diameter was 5.0 mm). The cylinder for injection 34 was heated to a temperature of 440 °C and the resin was kept in its molten condition. The resin was injected into the cavity 13 of the mold having an inner diameter of 40 mm and a thickness of 20 mm (in a state wherein the edge of the plate for compression 14 in the cavity was located at a position A) in 25 seconds and the cavity 13 was filled with the molten fluorine resin.

Upon the injection, the temperature of the cavity (the temperature of the mold surface 23) was set at 350 °C by opening the mold while the entire of the mold was kept at a temperature of 250 °C using a cartridge heater and instantaneously heating the surface (a thickness thereof was 0. 2 mm) of the mold by means of the high-frequency induction heating apparatus 24 so that the surface was kept at a temperature of 350 °C. Thereafter, the mold was closed, and the fluorine resin was injected as described above, and the edge of the plate for compression 14 in the cavity was moved to a position B while applying a compression pressure of 175 kgf/cm² (cavity dimensions: an inner diameter of 40 mm and a thickness of 13 mm, compression ratio: 35 %).

By heat transfer from the fluorine resin to the mold inside through the mold surface, the temperature of the mold surface was lowered in a short period (about two minutes), and thereby the resin was cooled to be solidified. When the temperature of the mold surface was lowered to 250 °C, the mold was opened and the molded article was removed. The appearance of the obtained article was good without whitening or insufficient fusion, and had a specific gravity of 2.2.

Properties of the fluorine resin, the conditions of the injection molding and so on are shown in Table 2 below.

It is noted that in Table 2, "o" represents that the appearance of the molded article is without whitening and the fusion is good. The compression ratio (%) in the cavity is calculated according to the following equation: [(cavity volume upon injection - cavity volume after compression) / cavity volume upon injection] x 100.

### Example 2

Example 1 was repeated under the conditions shown in Table 2 except that an ultrahigh molecular weight PFA (melt viscosity: 5 x 10⁵ poise) was used in place of the PTFE of Example 1.

Results of Example 2 are also shown together in Table 2:

**Table 2**

| | Example No. | | unit | 1 | 2 |
|---|---|---|---|---|---|
| raw material properties | fluorine resin kind | | - | PTFE | PFA |
| | melt viscosity | | poise | 6×10⁹ | 5×10⁵ |
| | melting temperature | | °C | 324 | 304 |
| | decomposition initiating temperature | | °C | 493 | 459 |
| conditions of injection molding | nozzle inner diameter of molding machine | | mm | 5.0 | 5.0 |
| | cylinder temperature | | °C | 440 | 440 |
| | shear rate | | sec⁻¹ | 80 | 160 |
| | mold cavity surface temperature | upon feeding resin | °C | 350 | 320 |
| | | upon taking out molded article | °C | 250 | 200 |
| | compression pressure | | kgf/cm² | 175 | 100 |
| | compression ratio in cavity | | % | 35 | 35 |
| | injection time | | second | 25 | 12 |
| molded article appearance | appearance of molded article | | - | o | o |
| | specific gravity of molded article | | - | 2.2 | 2.2 |

### Example 3

A gelled and disintegrated fluorine resin was prepared in the following manner:

A granule type PTFE (manufactured by Daikin Industries Ltd., trade name: NEW POLYFLON TFE M-137, melt viscosity: 5x10⁹ poise, average granule diameter: 400 µm, apparent density: 0.80 g/cm³, true density: 2.17 g/cm³, melting temperature: 323 °C, decomposition initiating temperature: 493 °C) was bedded in a stainless steel made vat with a thickness of 5 cm, and the vat was located and heated under an air atmosphere in an oven. Heating was carried out by raising the oven temperature from room temperature to 365 °C in two hours, and keeping that temperature for two and half hours, followed by cooling to room temperature in four hours.

The appearance of the resulted fluorine resin was of a block form in which each particle kept its original shape while the particles were joined together. The block resin was ground (or size-reduced) by means of a granulator (of a rotary blade type) so that the gelled and disintegrated fluorine resin having an average granule size of 1 mm was obtained. The gelled and disintegrated fluorine resin had an apparent density of 1.05 g/cm³.

Using the resulted gelled and disintegrated fluorine resin, an injection molding machine as shown in Fig. 5 and a mold as shown in Fig. 4 (of a type in which the mold is opened upon injection), a molded article as schematically shown in Fig. 6 was formed. The molding conditions and estimations of the molded article (which are the same as those in Table 2) are shown in Table 3 below. It is noted that a back pressure of about 50 kgf/cm² was applied to the mold upon the injection of the resin into the mold, and no change happened in the mold in the initial stage of the injection but the mold was opened 10 mm in the final stage of the injection because the pressure of the resin became high sufficiently to exceed the back pressure. Thereafter, a compression force of about 200 kgf/cm² was applied, which was kept until the mold temperature was lowered to 250 °C at which the release of the molded article was possible.

### Example 4

A gelled and disintegrated fluorine resin was prepared in the following manner:

A powder type PTFE (manufactured by Daikin Industries Ltd., trade name: NEW POLYFLON TFE M-111, melt viscosity: 6x10⁹ poise, average particle diameter: 33 µm, apparent density: 0.35 g/cm³, true density: 2.17 g/cm³, melting temperature: 324 °C, decomposition initiating temperature: 493 °C) was bedded in a stainless steel made vat with a thickness of 5 cm, and the vat was located and heated under an air atmosphere in an oven. Heating was carried out by raising the oven temperature from room temperature to 365 °C in two hours, and keeping that temperature for two and half hours, followed by cooling to room temperature in four hours.

The appearance of the resulted fluorine resin was of a block form in which each particle kept its original shape while the particles were joined together. The block resin was ground (or size-reduced) similarly to Example 3 so that the gelled and disintegrated fluorine resin having an average particle size of 1 mm was obtained. The gelled and disintegrated fluorine resin had an apparent density of 0.75 g/cm³.

Similarly to Example 3, using the resulted gelled and disintegrated fluorine resin, a molded article as shown in Fig. 6 was formed. The molding conditions and estimations of the molded article (which are the same as those in Table 2) are shown in Table 3 below.

### Example 5

A gelled and disintegrated fluorine resin was prepared in the following manner:

A powder type PTFE (manufactured by Daikin Industries Ltd., trade name: NEW POLYFLON TFE M-12, melt viscosity: 3x10¹⁰ poise, average diameter: 25 µm, apparent density: 0.29 g/cm³, true density: 2.16 g/cm³, melting temperature: 328 °C, decomposition initiating temperature: 493 °C) was bedded in a stainless steel made vat with a thickness of 5 cm, and the vat was located and heated under an air atmosphere in an oven. Heating was carried out by raising the oven temperature from room temperature to 385 °C in two hours, and keeping that temperature for three hours, followed by cooling to room temperature in five hours.

The appearance of the resulted fluorine resin was of a block form in which each particle kept its original shape while the particles were joined together. The block resin was ground (or size-reduced) similarly to Example 3 so that the gelled and disintegrated fluorine resin having an average particle size of 500 µm. The gelled and disintegrated fluorine resin had an apparent density of 0.53 g/cm³.

Similarly to Example 3, using the resulted gelled and disintegrated fluorine resin, a molded article as shown in Fig. 6 was formed. The molding conditions and estimations of the molded article (which are the same as those in Table 2) are shown in Table 3 below:

**Table 3**

| | Example No. | | unit | 3 | 4 | 5 |
|---|---|---|---|---|---|---|
| raw material properties | fluorine resin kind | | - | gelled PTFE | gelled PTFE | gelled PTFE |
| | melt viscosity | | poise | 5×10⁹ | 6×10⁹ | 3×10¹⁰ |
| | melting temperature | | °C | 323 | 324 | 328 |
| | decomposition initiating temperature | | °C | 493 | 493 | 493 |
| conditions of injection molding | nozzle inner diameter of molding machine | | mm | 5 | 5 | 5 |
| | cylinder temperature | | °C | 460 | 460 | 480 |
| | shear rate | | sec⁻¹ | 10³ | 10³ | 10³ |
| | mold cavity surface temperature | upon feeding resin | °C | 350 | 380 | 420 |
| | | upon taking out molded article | °C | 250 | 250 | 250 |
| | compression pressure | | kgf/cm² | 200 | 200 | 200 |
| | injection time | | second | 10 | 10 | 10 |
| molded article properties | appearance of molded article | | - | o | o | o |
| | specific gravity of molded article | | - | 2.17 | 2.17 | 2.16 |

In Examples 1 and 2, a bridge was formed during the molding operation, but no substantive problem occurred by mechanically breaking the bridge (for example, by pushing the bridging resin into the machine inside by means of a rod). In Examples 3 to 5, no problem occurred at all during the molding operation.

## Claims

1. A method for molding a fluorine resin by supplying the fluorine resin in its molten state into a mold followed by cooling so as to solidify the resin, whereby a molded article of the fluorine resin is obtained, which method is characterized in that the fluorine resin in its molten state is supplied into the mold which is kept at a temperature of a melting temperature of the resin or above the melting temperature.

2. The method according to claim 1 wherein the mold is kept at a temperature which is higher than the melting temperature of the fluorine resin by 0 °C to 80 C°.

3. The method according to claim 1 or 2 wherein the fluorine resin has a melt viscosity in the range between 10⁵ poise and 10¹³ poise.

4. The method according to any one of claims 1 to 3 wherein the fluorine resin is selected from polytetrafluoroethylene, tetrafluoroethylene/perfluoroalkyl vinyl ether copolymer, tetrafluoroethylene/hexafluoropropylene copolymer, polychlorotrifluoroetylene, polyvinylidene fluride, ethylene/tetrafluoroethylene copolymer and ethylene/cholotrifluoroethylene copolymer.

5. The method according to any one of claims 1 to 4 wherein the mold is heated by high frequency induction heating.

6. The method according to any one of claims 1 to 5 wherein molding is carried out in an injection compression method.

7. The method according to any one of claims 1 to 6 wherein molding is carried out using a preplasticating injection molding machine.

8. The method according to claim 7 wherein the molten fluorine resin is supplied into a cavity on which a back pressure is acted with a pressure exceeding the back pressure, and the molten resin is supplied into the mold from the cavity.

9. The method according to any one of claims 1 to 6 wherein molding is carried out using a plunger type injection molding machine.

10. The method according to any one of claims 1 to 6 wherein molding is carried out using an inline screw type injection molding machine.

11. The method according to any one of claims 1 to 10 wherein the molten fluorine resin is supplied into the mold at a shear rate of not greater than 10⁴ sec⁻¹.

12. The method according to any one of claims 1 to 11 wherein the fluorine resin is a gelled and disintegrated fluorine resin.

13. A method for molding a fluorine resin so as to obtain a molded article of the fluorine resin by supplying the fluorine resin in its molten state into a mold followed by cooling so as to solidify the resin wherein the fluorine resin is a gelled and disintegrated fluorine resin.

14. The method according to claim 13 wherein the mold is kept at a temperature in the range between a temperature which is lower than a melting temperature of the fluorine resin by 50 °C and a decomposition initiating temperature of the fluorine resin.

15. The method according to claim 13 or 14 wherein the fluorine resin has a melt viscosity in the range between 10⁵ poise and 10¹³ poise.

16. The method according to any one of claims 13 to 15 wherein the fluorine resin is selected from polytetrafluoroethylene, tetrafluoroethylene/perfluoroalkyl vinyl ether copolymer, tetrafluoroethylene/hexafluoropropylene copolymer, polychlorotrifluoroetylene, polyvinylidene fluride, ethylene/tetrafluoroethylene copolymer and ethylene/cholotrifluoroethylene copolymer.

17. The method according to any one of claims 13 to 16 wherein molding is carried out in an injection compression method.

18. The method according to any one of claims 13 to 17 wherein the molten fluorine resin is supplied into the mold at a shear rate of not greater than 10⁷ sec⁻¹.

19. The method according to any one of claims 13 to 18 wherein the molten fluorine resin is supplied into the mold at a shear rate of not greater than 10⁴ sec⁻¹.

20. A molded article of a fluorine resin formed by any one of the methods according to claims 1 to 19.
